Europäisches Patentamt

European Patent Office

Office européen des brevets

(19)

(11) Numéro de publication: **0 136 553**
A2

## (12) DEMANDE DE BREVET EUROPEEN

(21) Numéro de dépôt: **84110353.4**

(22) Date de dépôt: **30.08.84**

(51) Int. Cl.⁴: **B 60 R 22/32**

(30) Priorité: **06.09.83 CH 4866/83**

(43) Date de publication de la demande:
**10.04.85 Bulletin 85/15**

(84) Etats contractants désignés:
**AT BE DE FR GB IT LU NL SE**

(71) Demandeur: **Jaunin, Michel**
**Chemin du Bochet 25**
**CH-1025 Saint-Sulpice(CH)**

(71) Demandeur: **VALSIDER S.A.**
**Ruelle Vautier**
**CH-1401 Yverdon(CH)**

(72) Inventeur: **Jaunin, Michel**
**Chemin du Bochet 25**
**CH-1025 Saint-Sulpice(CH)**

(74) Mandataire: **Robert, Jean S.**
**51, route du Prieur**
**CH-1257 Landecy (Genève)(CH)**

(54) **Dispositif d'accrochage d'une ceinture de sécurité pour passager de véhicule, à décrochage automatique après un choc.**

(57) La ferrure (12) de la ceinture (14) est accrochée à un élément mobile (5) par un organe de retenue (20). L'élément (5) coulisse sur une tige (1) fixée au véhicule et qui présente une partie sphérique (1d) située en regard d'une garniture annulaire de caoutchouc (8), portée par l'élément mobile (5). Lorsqu'une forte traction est exercée sur la ceinture (14), l'élément mobile (5) est déplacé à l'encontre d'un ressort de rappel (7) et la sphère (1d) franchit en frottant la garniture (8). Lorsque la traction cesse, le ressort (7) provoque le retour de l'élément mobile (5) qui est ralenti par le passage de la sphère (1d) à travers la garniture (8). Aussitôt cette garniture (8) franchie par la sphère (1d), l'élément mobile (5) est libéré et le ressort de rappel (7) le déplace alors de façon instantanée vers la gauche. Une pièce articulée (24) que porte un cliquet (9) solidaire de la tige (1) agit sur une saillie (20a) de l'organe de retenue (20) pour déplacer ce dernier axialement et libérer ainsi la ferrure (12) de la ceinture (14).

FIG. 6

EP 0 136 553 A2

0136553

Dispositif d'accrochage d'une ceinture de sécurité pour passager de véhicule, à décrochage automatique après un choc.

La présente invention a pour objet un dispositif d'accrochage d'une ceinture de sécurité pour passager de
véhicule, à décrochage automatique après un choc.

Le but de l'invention est de fournir un dispositif d'accrochage de ceinture de sécurité du type susmentionné qui soit à la fois fiable, robuste, facile à manoeuvrer et
commode pour son utilisateur.

Ce but est atteint grâce aux moyens définis
dans la revendication 1.

Le dessin représente, à titre d'exemple, une
forme d'exécution de l'objet de l'invention.

La fig. 1 est une vue en élévation d'un dispositif d'accrochage de ceinture de sécurité.

La fig. 2 est une vue en perspective d'une partie de ce dispositif à plus grande échelle.

- 2 -

0136553

La fig. 3 est une coupe longitudinale de ce dispositif dans la position qu'il occupe lorsque la ceinture est prête à être accrochée.

La fig. 4 en est une coupe transversale suivant la ligne IV-IV de la fig. 3.

La fig. 5 est une vue en plan d'un détail.

La fig. 6 est une coupe longitudinale du dispositif à plus grande échelle, la ceinture étant accrochée, dans la position qu'occupe le dispositif lorsqu'aucune traction n'est exercée sur la ceinture.

La fig. 7 est une coupe longitudinale à l'échelle de la fig. 3, la ceinture étant décrochée, la libération de celle-ci étant effectuée manuellement.

La fig. 8 est une coupe longitudinale du dispositif à l'échelle de la fig. 6, dans laquelle la ceinture est accrochée, dans la position qu'occupe le dispositif lorsqu'une traction est exercée sur la ceinture, et

- 3 -

0136553

La fig. 9 est une coupe longitudinale, à l'échelle de la fig. 3, dans laquelle la ceinture est décrochée, la libération de celle-ci étant effectuée automatiquement.

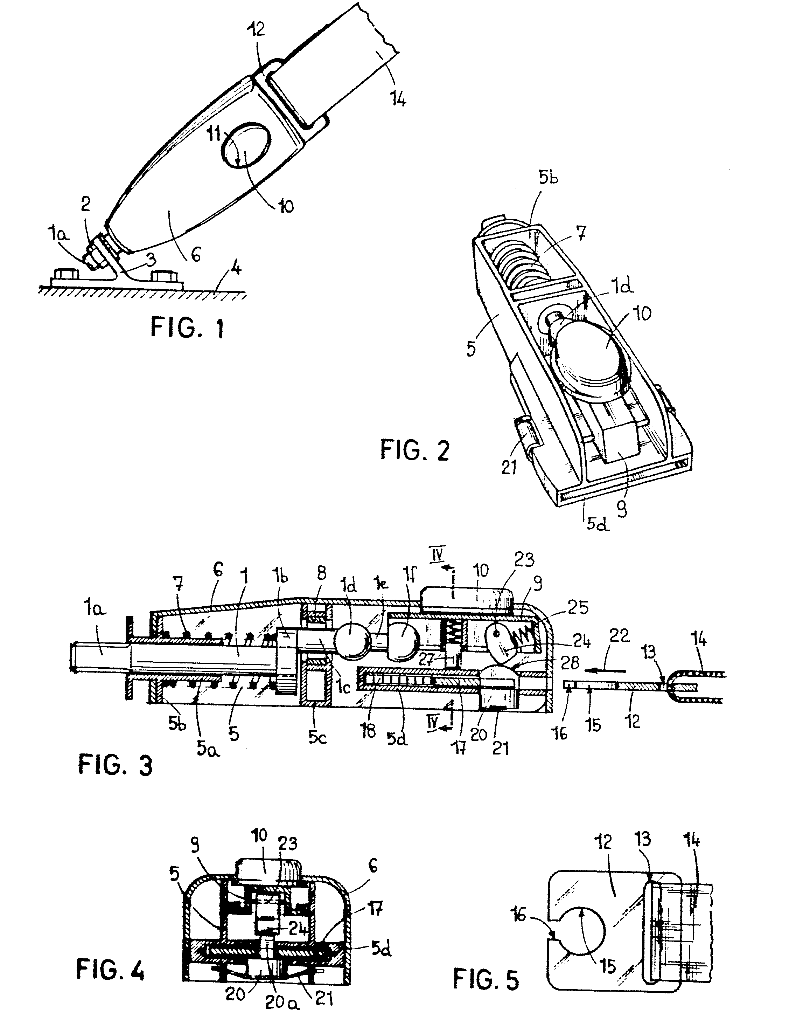

Le dispositif comprend un premier élément, fixe, constitué par une tige 1 se terminant par une partie filetée 1a se fixant, à l'aide d'un écrou 2, à une ferrure 3 elle-même boulonnée sur un élément 4 du véhicule (fig. 1). Le dispositif comprend en outre un élément mobile constitué par un bâti 5 sur lequel se monte un boîtier 6, ce bâti présentant une partie 5a en forme de manchon, coulissant sur la tige 1. Un ressort de rappel à boudin 7 est engagé sur la tige 1 et prend appui d'une part sur une partie transversale postérieure 5b du bâti 5 et d'autre part sur un épaulement 1b de la tige 1. Ce ressort à boudin tend à maintenir l'élément mobile dans la position --de repos-- représentée aux figs. 3, 6, 7 et 9. La tige 1 se prolonge, au-delà de son épaulement 1b, par une partie 1c, excentrée par rapport à l'axe de la tige, présentant elle-même une partie sphérique 1d située en regard d'une garniture annulaire 8, en caoutchouc, portée par un support transversal 5c du bâti 5. Les diamètres relatifs entre la garniture 8 et la sphère 1d sont tels que la garniture exerce une friction sur la sphère lorsque celle-ci est appelée à traverser la garniture. La tige 1c

se prolonge encore par une partie de plus petite section 1e

se terminant par une rotule 1f sur laquelle est articulée une pièce formant cliquet 9 dont le rôle sera indiqué plus loin. Cette pièce 9 sert d'appui à un bouton de commande ovale 10 traversant une ouverture de forme correspondante 11 ménagée dans le boîtier 6. Le bâti mobile 5 présente une partie 5d formant réceptacle pour une ferrure 12 présentant une fente 13 dans laquelle est engagée la ceinture, désignée par 14.

Cette ferrure est constituée par une plaque percée d'une ouverture circulaire 15 (fig. 5) et d'une entrée constituée par une encoche longitudinale 16 ouvrant sur ladite ouverture. Le réceptacle 5d contient un extracteur de la ferrure 12 constitué par une plaque 17 soumise à l'action d'un ressort de rappel formé d'une lame 18 repliée en zig-zag. On pourra prévoir également de remplacer la lame 18 par des ressorts à boudin travaillant à la traction. La plaque 17 présente, à son extrémité antérieure, une encoche longitudinale 19.

Les parois du réceptacle 5d sont percées d'ouvertures dans lesquelles est monté de façon coulissante un organe de retenue 20 soumis à l'action d'un ressort-lame 21, de rappel, tendant à déplacer cet organe de retenue 20 en direction de la pièce formant cliquet 9. La partie supérieure de l'organe de retenue 20 présente une saillie diamétrale 20a.

Le plan de la saillie 20a coïncide avec l'axe longitudinal du dispositif, l'organe 20 étant empêché de tourner sur lui-même par le fait que l'ouverture de la paroi supérieure du réceptacle 5d est constituée par une fente dont la dimension correspond à celle de ladite saillie.

Lorsque la ferrure 12 de la ceinture 14 est engagée dans le réceptacle 5d, par déplacement dans le sens de la flèche 22 de la fig. 3, son encoche 16 s'engage sur la saillie 20a de l'organe de retenue 20 et son extrémité pousse devant elle la plaque éjectrice 17, armant le ressort de rappel 18 de cette dernière. Lorsque l'ouverture circulaire 15 de la ferrure 12 est située en regard de l'organe de retenue 20, ce dernier s'engage, sous l'effet de son ressort de rappel 21, dans ladite ouverture, verrouillant ainsi en position la ferrure 12.

La pièce formant cliquet 9 porte, articulée sur elle en 23, une pièce oscillante 24 qu'un ressort de rappel 25 tend à déplacer en direction de l'organe de retenue 20, alors que la pièce 9 est elle-même soumise à l'action d'un ressort de rappel 26 agissant par l'intermédiaire d'un poussoir 27 prenant appui sur la paroi supérieure du réceptacle 5d, ce qui tend à éloigner la pièce 9 de l'organe de retenue 20.

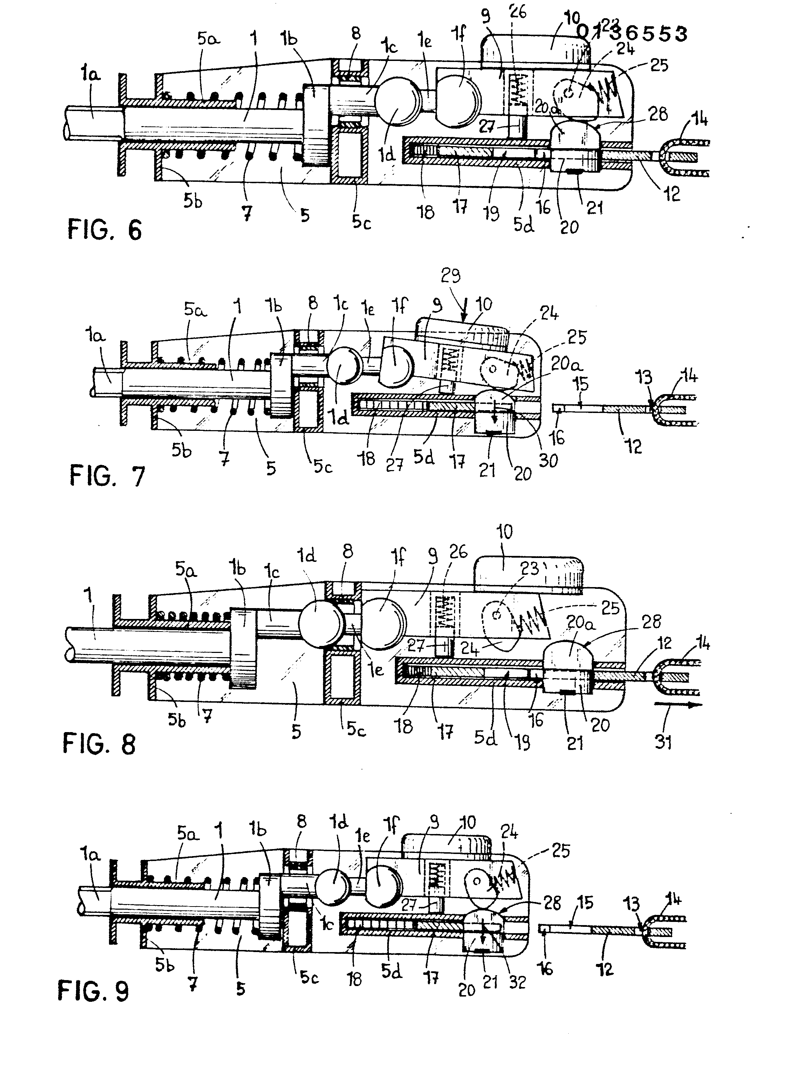

Lorsque la ceinture est accrochée, la ferrure 12 étant engagée dans le réceptacle 5d, et qu'aucune traction n'est exercée sur la ceinture, le mécanisme est au repos, dans la position représentée à la fig. 6, la pièce oscillante 24 étant en appui sur la face supérieure, bombée, désignée par 28, de la saillie 20a de l'organe de retenue 20. Si, dans cette position du dispositif, une pression est exercée sur le bouton de commande 10, comme indiqué en 29 à la fig. 7, la pièce formant cliquet 9 subit une rotation dans le sens des aiguilles de la montre et la pièce 24, après avoir tourné en sens contraire autour de son axe 23, à l'encontre de l'action de son ressort de rappel 25, agit sur la saillie 20a de l'organe de retenue 20, comme le montre la fig. 7, pour déplacer ce dernier dans le sens de la flèche 30. Au moment où le corps cylindrique de l'organe de retenue 20 sort de l'ouverture circulaire 15 de la ferrure 12, cette dernière est éjectée hors du réceptacle 5d par l'extracteur 17 actionné lui-même par son ressort de rappel 18. La ceinture 14 est ainsi libérée.

Si, lorsque la ceinture est accrochée, le dispositif occupant la position représentée à la fig. 6, une traction est exercée sur la ceinture, comme indiqué par la flèche 31 de la fig. 8, l'élément mobile constitué par le bâti 5 se déplace vers la droite de cette figure et, pour autant que la traction exercée sur la ceinture soit suffisante, ce qui est le cas lorsque le véhicule subit un choc, la sphère 1d de l'élément fixe 1 franchit la garniture élastique 8 malgré la friction que cette dernière exerce sur ladite sphère. A fin de course, le mécanisme occupe la position représentée à la fig. 8. Tant que la traction sur la ceinture se maintient, la ceinture reste accrochée, sauf si une pression est exercée sur le bouton de commande manuelle 10, auquel cas la pièce formant cliquet 9 agit, par son extrémité, sur l'organe de retenue 20 pour l'extraire de l'ouverture 15 de la ferrure 12.

Si la traction exercée sur la ceinture se relâche, l'élément mobile constitué par le bâti 5 se déplace vers la gauche de la fig. 8, sous l'effet du ressort de rappel 7. Le mouvement de l'élément mobile est toutefois ralenti par la friction exercée par la garniture 8 sur la sphère 1d de la tige fixe 1. Ce n'est que lorsque la sphère 1d a franchi la garniture de friction 8 que l'élément mobile effectue alors un mouvement instantané vers la gauche de la fig. 8 au cours duquel la pièce 24, glissant sur la surface bombée 28 de la saillie 20a de l'organe de retenue 20, agit sur ce dernier pour l'extraire de l'ouverture 15 de la ferrure 12 comme indiqué par la flèche 32 de la fig. 9.

Il est à remarquer que, si après une traction exercée sur la ceinture ayant amené la sphère 1d à franchir la garniture de friction 8, la traction est interrompue pour

- 8 -

0136553

reprendre ensuite, et même à de réitérées reprises, comme cela peut être le cas lorsque le véhicule effectue une série de tonneaux, la ceinture ne se décroche pas intempestivement car, entre deux tractions, la sphère $1d$ n'a pas le temps de refranchir la garniture de friction 8, cette dernière étant agencée pour que le retard entre le moment où cesse la traction et celui où s'effectue le décrochage soit de l'ordre de 4 secondes environ.

Il est également à remarquer que, si la ceinture est dépourvue d'enrouleur automatique, l'utilisateur peut produire volontairement le décrochage de celle-ci sans agir manuellement sur le bouton de commande 10. Il lui suffit, à cet effet, d'exercer une brève traction sur la ceinture, déplaçant ainsi l'élément mobile 5 par rapport à l'élément fixe 1, mais sans amener la sphère $1d$ de ce dernier à franchir la garniture de friction 8. En relâchant brusquement cette brève traction, l'utilisateur permet au ressort 7, bien que ce dernier n'ait été que fort peu armé par le déplacement de l'élément mobile, à rappeler celui-ci suffisamment vigoureusement pour que la pièce 24, agissant sur l'organe de retenue 20, produise le décrochage de la ceinture. Il n'y a cependant pas de risque que des faibles tractions exercées sur la ceinture involontairement par l'usager provoquent un décrochage intempestif de la ceinture. En effet, si de telles faibles tractions, qui n'arment que peu les ressorts 7, ne sont pas suivies d'un relâchement rapide de

- 9 -

0136553

la ceinture, le ressort 7, peu armé, ne parvient pas à produire, par l'intermédiaire de la pièce 24 et de l'organe de retenue 20, le décrochage de la ceinture. En effet, dans ce cas, le ressort de rappel 25 de la pièce 24 cède et le cliquet est inopérant.

Il est à remarquer que, dans ce dispositif, l'armage du ressort de décrochage, en l'occurrence le ressort 7, ne s'effectue qu'au moment seulement où un tel décrochage doit avoir lieu, ce qui évite d'une part d'avoir à réarmer le dispositif après fonctionnement et d'autre part que ce ressort reste armé en permanence. De plus, comme indiqué plus haut, en cas de chocs successifs, aucun décrochage ne se produit intempestivement puisque ce n'est qu'une fois que le temps de retardement s'est écoulé, à la suite de la dernière traction exercée sur la ceinture, que le décrochage a lieu, alors que, dans le cas des mécanismes à minuterie, le décrochage se produit après un temps donné compté à partir de la première traction, quelles que soient les circonstances de l'accident.

Enfin, il est également à remarquer que le dispositif ralentisseur constitué, dans la forme d'exécution décrite et représentée, par la sphère 1d traversant la garniture annulaire en caoutchouc 8 pourrait être remplacé par un dispositif hydraulique ou pneumatique comportant un piston solidaire de la tige 1, se déplaçant dans un cylindre muni d'une soupape unidirectionnelle d'admission et d'un orifice de décharge calibré, de telle manière que, dans un sens de déplacement du piston, le fluide entre dans le cylindre librement alors que, en sens inverse, il n'en sorte que par l'orifice calibré qui détermine ainsi la vitesse de déplacement.

0136553

REVENDICATIONS :

1. Dispositif d'accrochage d'une ceinture de sécurité pour passager de véhicule, à décrochage automatique après un choc, caractérisé par le fait qu'il comprend un élément fixe, solidaire du véhicule, un élément mobile par rapport au premier, solidaire de la ceinture, et qui est soumis à l'action d'un dispositif élastique de rappel qui tend à le maintenir, par rapport à l'élément fixe, en position de repos, l'un desdits éléments portant un mécanisme de décrochage de la ceinture et l'autre un organe de commande de ce mécanisme de décrochage, agencé pour actionner ce dernier au cours des mouvements de retour de l'élément mobile en position de repos mais non pas lors des déplacements dudit élément mobile produits par une traction exercée sur la ceinture, un dispositif retardateur agissant en outre sur ledit élément mobile pour ralentir ses mouvements de retour en position de repos, le tout de manière que, lorsqu'une traction est exercée sur la ceinture, à la suite d'un choc, l'élément mobile se déplace par rapport à l'élément fixe, armant ainsi le dispositif élastique de rappel et que, lors du mouvement retardé, de retour de l'élément mobile en position de repos, sous l'effet du dispositif élastique de rappel, l'organe de commande du mécanisme de décrochage actionne ce dernier et que, de ce fait, la ceinture soit libérée.

2. Dispositif suivant la revendication 1, caractérisé par le fait que le dispositif retardateur comprend
une garniture annulaire en matière souple et compressible portée par
l'un desdits éléments, traversée par une tige solidaire de l'autre élément, qui est munie d'une partie sphérique, le diamètre intérieur de ladite garniture annulaire et le diamètre
de ladite partie sphérique étant tels que la garniture annulaire exerce une friction sur ladite partie sphérique lorsque
cette dernière la traverse, ce qui ralentit les mouvements
relatifs entre ladite garniture et ladite partie sphérique
lorsque ceux-ci sont produits par une force telle que celle
qu'exerce le dispositif élastique de rappel.

3. Dispositif suivant la revendication 1, caractérisé par le fait que l'élément mobile est agencé pour
recevoir une ferrure solidaire de la ceinture, laquelle ferrure est percée d'une ouverture destinée à recevoir un organe de retenue, porté par l'élément mobile, monté sur lui de
façon à pouvoir se déplacer et occuper une position de travail dans laquelle il est apte à retenir la ferrure de la
ceinture, et une position éclipsée dans laquelle il libère
ladite ferrure.

- 13 -

0136553

4. Dispositif suivant la revendication 3, caractérisé par le fait que l'élément mobile porte un extracteur de la ferrure de la ceinture, cet extracteur comportant un dispositif élastique de rappel agissant sur une pièce mobile située en regard de la ferrure de la ceinture lorsque celle-ci est engagée sur l'élément mobile, son engagement produisant l'armage dudit dispositif élastique de rappel, le tout de telle manière que, lorsque la ferrure est libérée de l'organe de retenue, elle soit éjectée par ladite pièce mobile sollicitée par son dispositif élastique de rappel.

5. Dispositif suivant la revendication 3, caractérisé par le fait que ledit organe de retenue présente une partie saillante apte à traverser une entrée longitudinale que présente ladite ferrure, qui débouche dans l'ouverture de celle-ci, de manière qu'une pression exercée sur ladite partie saillante amène l'organe de retenue dans sa position dans laquelle il libère la ferrure, cette dernière se dégageant dudit organe de retenue grâce à son entrée longitudinale livrant passage à ladite partie saillante.

6. Dispositif suivant les revendications 1 et 3, caractérisé par le fait que l'élément fixe, solidaire du véhicule, porte, articulée sur lui, une pièce formant cliquet, qui porte elle-même, articulée sur elle, une pièce oscillante de commande de l'organe de retenue, cette pièce formant cliquet étant soumise à l'action d'un ressort de rappel qui tend à l'éloigner de
l'organe de retenue alors que la pièce oscillante est soumise
à l'action d'un ressort de rappel qui tend à l'en rapprocher.

7. Dispositif suivant la revendication 6, caractérisé par le fait que l'élément mobile porte un bouton
de commande manuelle du décrochage de la ceinture qui agit
sur ladite pièce formant cliquet pour permettre de déplacer cette dernière à l'encontre de l'action de son ressort de rappel en un mouvement au cours duquel elle agit au moins indirectement sur l'organe de retenue pour l'amener en position de décrochage.

8. Dispositif suivant les revendications 2 et
6, caractérisé par le fait que l'élément fixe est constitué
par une tige présentant des moyens permettant de la fixer,
par une de ses extrémités, au véhicule, et sur laquelle coulisse un manchon solidaire de l'élément mobile, le dispositif élastique de rappel de ce dernier étant constitué par
un ressort à boudin engagé sur ladite tige, prenant appui
d'une part sur un épaulement que présente celle-ci et d'autre part sur l'élément mobile, ladite tige se prolongeant,
au-delà dudit épaulement, par une partie également en forme
de tige présentant ladite partie sphérique et qui se prolonge à nouveau, au-delà de ladite partie sphérique, par une
rotule terminale sur laquelle est articulée ladite pièce
formant cliquet.

0136553

FIG. 1

FIG. 2

FIG. 3

FIG. 4

FIG. 5

0136553

FIG. 6

FIG. 7

FIG. 8

FIG. 9